# EUROPÄISCHE PATENTSCHRIFT

(11) **EP 3 417 179 B1**
(45) Veröffentlichungstag und Bekanntmachung des Hinweises auf die Patenterteilung: **06.04.2022**
(21) Anmeldenummer: 16822133.1
(22) Anmeldetag: 14.12.2016
(51) Int. Cl.: F16B 12/16, F16B 5/06, F16B 5/02

(54) **VERBINDUNGSMITTEL UND VERFAHREN ZUM VERBINDEN ZWEIER BAUTEILE**
CONNECTING MEANS AND METHOD FOR CONNECTING TWO COMPONENTS
MOYEN DE LIAISON ET PROCÉDÉ POUR RELIER DEUX ÉLÉMENTS

(30) Priorität: 17.02.2016 DE 102016202450
(43) Veröffentlichungstag der Anmeldung: 26.12.2018
(60) Teilanmeldung: 18210356.4
(73) Patentinhaber: Lamello AG, 4416 Bubendorf (CH); Baur, Franz, 87534 Oberstaufen (DE); Haser, Franz Josef, 87534 Oberstaufen (DE)
(72) Erfinder: BAUR, Franz, 4416 Bubendorf (DE); HASER, Franz Josef, 4416 Bubendorf (DE); JEKER, Patrick, 4225 Brislach (CH); SEILER, Philipp, 4424 Arboldswil (CH)
(74) Vertreter: DTS Patent- und Rechtsanwälte Schnekenbühl und Partner mbB
(86) Internationale Anmeldenummer: PCT/EP2016/081079
(87) Internationale Veröffentlichungsnummer: WO 2017/140399

(56) Entgegenhaltungen:
- DE-A1-102008 056 027
- DE-T2- 69 016 621
- US-A- 3 279 830

## Beschreibung

Die vorliegende Erfindung betrifft ein Verbindungsmittel, welches insbesondere im Möbel- und Maschinenbau zum Einsatz kommt. Mittels des Verbindungsmittels sind insbesondere zwei Bauteile eines Möbelstücks oder zwei Bauteile einer Maschine miteinander verbindbar.

Verbindungsmittel sind aus der DE 690 16 621 T2, der DE 10 2008 056 027 A1 und der US 3,279,830 A bekannt.

Der vorliegenden Erfindung liegt die Aufgabe zugrunde, ein Verbindungsmittel zur Verbindung zweier Bauteile bereitzustellen, welches einfach herstellbar ist und eine stabile und zuverlässige Verbindung der zwei Bauteile ermöglicht.

Diese Aufgabe wird erfindungsgemäß durch ein Verbindungsmittel zur Verbindung zweier Bauteile gemäß Anspruch 1 gelöst.

Dadurch, dass der Grundkörper eine Einbringöffnung und/oder eine Festlegungsöffnung umfasst, kann das Befestigungselement vorzugsweise einfach und sicher in dem Grundkörper angeordnet und an demselben festgelegt werden. Dadurch, dass der Grundkörper ferner vorzugsweise eine von der Einbringöffnung und/oder der Festlegungsöffnung verschiedene Betätigungsöffnung umfasst, kann das Befestigungselement vorzugsweise durch eine besonders schmale und/oder optisch ansprechende Zugangsöffnung hindurch betätigt werden.

Insbesondere kann durch die Kombination aus Einbringöffnung, Festlegungsöffnung und Betätigungsöffnung eine komfortable Handhabung des Verbindungsmittels sowie eine zuverlässige und stabile Verbindung der zwei Bauteile ermöglicht werden.

Die Einbringöffnung des Grundkörpers dient vorzugsweise dem Einbringen des Befestigungselements in den Aufnahmekanal.

Es kann jedoch auch vorgesehen sein, dass das Befestigungselement durch die Betätigungsöffnung hindurch in den Aufnahmekanal einbringbar ist.

Die Betätigungsöffnung ist dann vorzugsweise zugleich die Einbringöffnung.

Die Betätigungsöffnung ist vorzugsweise zumindest abschnittsweise und/oder zumindest näherungsweise komplementär zu einer Außenkontur des Befestigungselements ausgebildet.

Beispielsweise kann vorgesehen sein, dass die Betätigungsöffnung einen schmalen Schlitzabschnitt und einen im Vergleich hierzu breiteren Abschnitt umfasst, durch welchen insbesondere ein Schraubenkopf eines als Schraube ausgebildeten Befestigungselements in den Aufnahmekanal einbringbar ist.

Die Festlegungsöffnung des Grundkörpers dient vorzugsweise der Festlegung des Befestigungselements einerseits an dem Grundkörper und andererseits an einem weiteren Bauteil.

Das Befestigungselement ragt vorzugsweise im montierten Zustand des Verbindungsmittels teilweise aus der Festlegungsöffnung heraus.

Insbesondere kann vorgesehen sein, dass das Befestigungselement im montierten Zustand des Verbindungsmittels die Festlegungsöffnung des Grundkörpers an deren dem Aufnahmekanal zugewandten Innenseite hintergreift.

Die Betätigungsöffnung ist vorzugsweise als ein Betätigungsschlitz ausgebildet.

Die Einbringöffnung und/oder die Festlegungsöffnung weisen vorzugsweise jeweils einen senkrecht zu einer Verbindungsrichtung des Verbindungselements genommenen im Wesentlichen kreisförmigen Querschnitt auf.

Günstig kann es sein, wenn der Grundkörper einstückig ausgebildet ist.

Beispielsweise kann vorgesehen sein, dass der Grundkörper als ein Kunststoff-Spritzgussbauteil oder als ein Metall-Druckgussbauteil ausgebildet ist.

Vorteilhaft kann es sein, wenn das Befestigungselement eine Schraube ist.

Hierbei kann vorgesehen sein, dass die Einbringöffnung größer ist als ein Schraubenkopf der Schraube.

Alternativ oder ergänzend hierzu kann vorgesehen sein, dass die Festlegungsöffnung kleiner ist als der Schraubenkopf der Schraube.

Ferner kann alternativ oder ergänzend hierzu vorgesehen sein, dass die Festlegungsöffnung größer ist als ein Gewindeabschnitt der Schraube.

Unter der Formulierung "größer" und "kleiner" ist in dieser Beschreibung und den beigefügten Ansprüchen insbesondere zu verstehen, dass das jeweilige

Element (Schraubenkopf, Gewindeabschnitt) durch die Öffnung hindurchführbar ist (Öffnung größer als das genannte Element) oder eben nicht durch die Öffnung hindurchführbar ist (Öffnung kleiner als das genannte Element).

Vorteilhaft kann es sein, wenn die Festlegungsöffnung einen oder mehrere radial nach innen ragende Vorsprünge umfasst, welche insbesondere mit einem Gewindeabschnitt eines als Schraube ausgebildeten Befestigungselements in Eingriff bringbar sind.

Das Befestigungselement ist dann insbesondere in einem montagebereiten Zustand an dem Grundkörper gegen ein Herausfallen gesichert.

Bei einer Ausgestaltung der Erfindung kann vorgesehen sein, dass die Betätigungsöffnung in mindestens einer Richtung kleiner ist als ein senkrecht zu einer Verbindungsrichtung des Befestigungselements genommener maximaler, minimaler und/oder durchschnittlicher Außendurchmesser des Befestigungselements, insbesondere eines Schraubenkopfs und/oder eines Gewindeabschnitts eines als Schraube ausgebildeten Befestigungselements.

Die Verbindungsrichtung ist vorzugsweise parallel zu einer Einbringrichtung des Befestigungselements, in welcher das Befestigungselement durch die Einbringöffnung hindurch in den Aufnahmekanal einführbar ist.

Vorzugsweise ist die Verbindungsrichtung parallel zu einer Haupterstreckungsrichtung des Aufnahmekanals.

Günstig kann es sein, wenn die Verbindungsrichtung parallel zu einer Rotationsachse des Befestigungselements ist. Das Befestigungselement ist vorzugsweise im Wesentlichen rotationssymmetrisch um die Rotationsachse ausgebildet.

Ferner kann vorgesehen sein, dass die Rotationsachse des Befestigungselements diejenige Achse ist, um welche das Befestigungselement zur Festlegung desselben an dem weiteren Bauteil drehbar ist oder gedreht wird.

Beispielsweise kann vorgesehen sein, dass die Verbindungsrichtung im Wesentlichen parallel zu einer Haupterstreckungsrichtung einer als Betätigungsschlitz ausgebildeten Betätigungsöffnung ist.

Die Verbindungsrichtung ist vorzugsweise eine Befestigungsrichtung, in welcher eine mittels des Verbindungsmittels zwischen den zwei Bauteilen wirkende Kraft ausgerichtet ist.

Es kann vorgesehen sein, dass das Befestigungselement einen Angriffsabschnitt umfasst, an welchem ein Benutzer des Verbindungsmittels zur Betätigung des Befestigungselements mittels eines Werkzeugs angreifen kann.

Vorzugsweise bildet das Werkzeug zur Betätigung des Befestigungselements zusammen mit dem Angriffsabschnitt ein Winkelgetriebe.

Der Angriffsabschnitt ist hierzu insbesondere als ein männliches oder weibliches Element einer Sechskantverbindung oder Sechsrundverbindung ausgebildet.

Vorzugsweise ist der Angriffsabschnitt an einem Schraubenkopf eines als Schraube ausgebildeten Befestigungselements angeordnet und/oder ausgebildet.

Der männliche Teil der Verbindung ist vorzugsweise als ein Rundkopf ausgebildet, insbesondere um das Befestigungselement auch bei schräger Ausrichtung des Werkzeugs betätigen zu können.

Der Grundkörper umfasst einen beispielsweise quaderförmigen Basisabschnitt und mehrere von dem Basisabschnitt wegragende oder hervorstehende Verankerungsabschnitte zur Verankerung des Grundkörpers in einem der Bauteile.

Mindestens ein Verankerungsabschnitt ist vorzugsweise als eine zylinderförmige Verdickung eines der Festlegungsöffnung abgewandten Endes des Grundkörpers ausgebildet.

Mindestens ein Verankerungsabschnitt kann beispielsweise als ein senkrecht oder schräg zu einer Verbindungsrichtung des Verbindungsmittels von dem Basisabschnitt wegragender Verankerungsbolzen ausgebildet sein.

Es kann vorgesehen sein, dass die Betätigungsöffnung sich in einer parallel zu einer Verbindungsrichtung des Verbindungsmittels verlaufenden Richtung über mindestens ungefähr ein Drittel, insbesondere mindestens ungefähr die Hälfte, einer in der Verbindungsrichtung genommenen Länge des Grundkörpers erstreckt.

Insbesondere kann vorgesehen sein, dass sich die Betätigungsöffnung in einer parallel zu einer Verbindungsrichtung des Verbindungsmittels verlaufenden Richtung über mindestens ungefähr zwei Drittel einer in der Verbindungsrichtung genommenen Länge des Grundkörpers erstreckt.

Eine dem Aufnahmekanal abgewandte Außenseite des Grundkörpers ist vorzugsweise zumindest abschnittsweise mit einem oder mehreren Verankerungselementen, insbesondere Verankerungsrippen, zur Verankerung des Grundkörpers in einem Bauteil versehen.

Insbesondere ist mittels der Verankerungsrippen eine Verankerung in einer senkrecht zur Verbindungsrichtung genommenen Richtung möglich.

Es kann jedoch auch vorgesehen sein, dass mittels der Verankerungsrippen eine Verankerung des Grundkörpers in einer parallel zur Verbindungsrichtung verlaufenden Richtung erzielt wird.

Vorteilhaft kann es sein, wenn das Verbindungsmittel zusätzlich zu dem Befestigungselement und dem in einem ersten der zwei Bauteile anordenbaren Grundkörper ein an einem zweiten der zwei Bauteile festlegbares Gegenstück umfasst. Zur Verbindung der zwei Bauteile ist das Befestigungselement vorzugsweise ausgehend von dem Grundkörper mit dem Gegenstück in Eingriff bringbar, beispielsweise verschraubbar.

Der Grundkörper umfasst vorzugsweise eine, zwei oder mehr Positioniervorsprünge, welche sich insbesondere in einem Bereich der Festlegungsöffnung in der Verbindungsrichtung von dem Grundkörper weg erstrecken.

Die Positioniervorsprünge sind insbesondere in eine Bohrung oder ein Gegenstück in dem zweiten Bauteil führbar, um eine einfache Relativpositionierung der zwei Bauteile vor der Festlegung des Befestigungselements zu ermöglichen.

Das Verbindungsmittel eignet sich insbesondere zur Verwendung in Kombination mit zwei Bauteilen. Eines der Bauteile weist vorzugsweise eine einer Außenform des Grundkörpers des Verbindungsmittels entsprechende Ausnehmung auf, so dass der Grundkörper formschlüssig in dem Bauteil festlegbar ist.

Die erfindungsgemäße Kombination weist vorzugsweise einzelne oder mehrere der im Zusammenhang mit dem erfindungsgemäßen Verbindungsmittel beschriebenen Merkmale und/oder Vorteile auf.

Die Ausnehmung in dem einen der Bauteile ist vorzugsweise sowohl von einer Hauptseite des beispielsweise plattenförmigen Bauteils als auch von einer Schmalseite dieses Bauteils zugänglich.

Im montierten Zustand des Verbindungsmittels erstreckt sich das Befestigungselement vorzugsweise über die Schmalseite des Bauteils hinaus und/oder in das weitere Bauteil hinein.

Die Bauteile sind vorzugsweise Möbelteile oder Maschinenteile.

Der Grundkörper des Verbindungsmittels kann beispielsweise durch Presspassung und/oder mittels einer Klebeverbindung an und/oder in einem der Bauteile festgelegt werden.

Alternativ oder ergänzend hierzu kann vorgesehen sein, dass der Grundkörper mittels einer Schraubverbindung, mittels eines oder mehrerer Einschlagbolzen, mittels einer Schwalbenschwanzverbindung und/oder mittels eines oder mehrerer Zapfen an und/oder in einem der beiden Bauteile festlegbar ist.

Das Werkzeug zum Betätigen des Befestigungselements ist vorzugsweise unmittelbar mit dem Befestigungselement in Eingriff bringbar.

Zum Verbinden der zwei Bauteile kann das Befestigungselement beispielsweise mittels des Grundkörpers an dem einen Bauteil festgelegt werden und unmittelbar oder mittelbar an dem weiteren Bauteil angreifen und/oder mit dem weiteren Bauteil in Eingriff gebracht werden.

Ein als Schraube ausgebildetes Befestigungselement kann beispielsweise hinsichtlich eines Schraubenkopfs und/oder eines Gewindeabschnitts eine Torx-Schraube, eine Inbus-Schraube, eine Euroschraube, eine Spax-Schraube oder eine Schraube mit M-Gewinde sein.

Insbesondere im Falle einer mittelbaren Festlegung des Befestigungselements an und/oder in dem weiteren Bauteil ist in und/oder an dem weiteren Bauteil vorzugsweise ein Gegenstück angeordnet, insbesondere festgelegt. An diesem Gegenstück greift das Befestigungselement vorzugsweise an.

Das Gegenstück kann beispielsweise eine Einschiebeplatte, eine Einschlagmuffe, eine Rampamuffe, eine Einschlagmutter oder eine Einleimmutter sein.

Die vorliegende Erfindung betrifft ferner ein Verfahren zum Verbinden zweier Bauteile.

Der Erfindung liegt diesbezüglich die Aufgabe zugrunde, ein Verfahren zum Verbinden zweier Bauteile bereitzustellen, welches einfach durchführbar ist und eine stabile und zuverlässige Verbindung zweier Bauteile ermöglicht.

Diese Aufgabe wird erfindungsgemäß dadurch gelöst, dass das Verfahren zum Verbinden zweier Bauteile Folgendes umfasst:
Bereitstellen eines Bauteils, insbesondere eines plattenförmigen Bauteils;
Einbringen einer Ausnehmung durch Bearbeitung des Bauteils, insbesondere mittels einer Fräsmaschine, bei welcher ein Fräskopf um eine senkrecht zu einer Hauptseite des Bauteils, insbesondere einer Hauptseite des plattenförmigen Bauteils, verlaufende Rotationsachse gedreht wird;
Einbringen eines Grundkörpers eines erfindungsgemäßen Verbindungsmittels in die Ausnehmung;
Verbinden der Bauteile miteinander durch Betätigen eines in dem Grundkörper angeordneten Befestigungselements des Verbindungsmittels.

Das erfindungsgemäße Verfahren weist vorzugsweise einzelne oder mehrere der im Zusammenhang mit dem erfindungsgemäßen Verbindungsmittel beschriebenen Merkmale und/oder Vorteile auf.

Günstig kann es sein, wenn das Befestigungselement in den Grundkörper eingebracht wird, bevor der Grundkörper in der Ausnehmung des Bauteils angeordnet wird.

Das Befestigungselement wird vorzugsweise durch eine Einbringöffnung des Grundkörpers in den Grundkörper eingebracht. Die Einbringöffnung ist in einem montierten Zustand des Grundkörpers, in welcher dieser in der Ausnehmung des Bauteils angeordnet ist, vorzugsweise unzugänglich.

Vorzugsweise sind im montierten Zustand des Grundkörpers, in welchem dieser in der Ausnehmung des Bauteils angeordnet ist, eine Festlegungsöffnung des Grundkörpers und eine Betätigungsöffnung des Grundkörpers zugänglich.

Das Befestigungselement ragt vorzugsweise durch die Festlegungsöffnung aus dem Grundkörper heraus, ist dabei jedoch vorzugsweise aufgrund eines Hinterschnittes formschlüssig in dem Grundkörper gehalten.

Sowohl die Festlegungsöffnung als auch die Betätigungsöffnung sind vorzugsweise in mindestens einer Erstreckungsrichtung kleiner als ein maximaler Außendurchmesser des Befestigungselements, insbesondere bezüglich einer Symmetrieachse oder Rotationsachse oder Längsachse des Befestigungselements.

Das Befestigungselement ist vorzugsweise weder durch die Festlegungsöffnung noch durch die Betätigungsöffnung hindurch aus dem Grundkörper entnehmbar.

Die Ausnehmung und/oder der Grundkörper des Verbindungsmittels sind vorzugsweise so geformt, dass mittels des Grundkörpers die in dem Bauteil vorgesehene Ausnehmung im Wesentlichen vollständig mit dem Grundkörper aufgefüllt wird oder auffüllbar ist.

Die Ausnehmung erstreckt sich vorzugsweise sowohl in einer Hauptseite des Bauteils als auch in einer Nebenseite, insbesondere einer Schmalseite, des Bauteils. Vorzugsweise ist eine Verbindungsrichtung des Verbindungsmittels senkrecht zu einer Nebenseite, insbesondere einer Schmalseite, des Bauteils ausgerichtet.

Es kann jedoch auch eine schräge Ausrichtung der Verbindungsrichtung relativ zu der Schmalseite vorgesehen sein.

Eine Stirnseite des Grundkörpers, in welcher die Festlegungsöffnung angeordnet ist, ist beispielsweise im Wesentlichen senkrecht zur Verbindungsrichtung ausgerichtet.

Ferner kann vorgesehen sein, dass die Stirnseite, in welcher die Festlegungsöffnung angeordnet ist, mit der Verbindungsrichtung einen Winkel von beispielsweise ungefähr 45° einschließt. Hierdurch kann das Verbindungsmittel insbesondere zum Verbinden zweier mit Gehrung versehener Platten verwendet werden.

Das Befestigungselement ist vorzugsweise drehbar um eine parallel zur Verbindungsrichtung verlaufende Rotationsachse in dem Grundkörper gelagert und/oder aufgenommen.

Beispielsweise ein als Schraube ausgebildetes Befestigungselement kann durch Drehen desselben mittels eines Werkzeugs unmittelbar in das zweite Bauteil eingeschraubt werden. Alternativ hierzu kann vorgesehen sein, dass das Befestigungselement in ein an und/oder in dem zweiten Bauteil angeordnetes Gegenstück einschraubbar ist.

Das Befestigungselement ist vorzugsweise durch die Betätigungsöffnung zugänglich, um das Befestigungselement mittels eines Werkzeugs in eine Drehbewegung zu versetzen.

Der Grundkörper des Verbindungsmittels umfasst mehrere Verankerungsabschnitte, welche als zumindest abschnittsweise zylinderförmige Verdickungen ausgebildet sind.

Die zumindest abschnittsweise zylinderförmigen Verdickungen sind unmittelbar aneinander angrenzend angeordnet und/oder ausgebildet.

Die zumindest abschnittsweise zylinderförmigen Verdickungen überlappen sich gegenseitig, so dass der Grundkörper in einem Querschnitt beispielsweise im Wesentlichen wolkenförmig ausgebildet ist.

Die Verankerungsabschnitte, insbesondere die zumindest abschnittsweise zylinderförmigen Verdickungen, weisen vorzugsweise parallel zueinander verlaufende Symmetrieachsen auf.

Die Symmetrieachsen sind vorzugsweise senkrecht zu einer Verbindungsrichtung des Verbindungsmittels ausgerichtet.

Bei einer Ausgestaltung der Erfindung kann vorgesehen sein, dass das Verbindungsmittel eine Spreizvorrichtung umfasst.

Eine Spreizvorrichtung umfasst vorzugsweise ein oder mehrere Spreizelemente, welche insbesondere von dem Grundkörper wegbewegbar, insbesondere aus dem Grundkörper herausschwenkbar, sind, um den Grundkörper in einem Bauteil zu verankern.

Günstig kann es sein, wenn ein oder mehrere Spreizelemente einstückig mit dem Grundkörper ausgebildet sind.

Vorteilhaft kann es sein, wenn zwei oder mehr Spreizelemente zu beiden Seiten eines Aufnahmekanals des Grundkörpers angeordnet sind.

Vorzugsweise sind ein oder mehrere Spreizelemente mittels des Befestigungselements betätigbar, insbesondere während der Festlegung des Befestigungselements in der Festlegungsöffnung.

Vorteilhaft kann es sein, wenn die Spreizelemente mittels des Befestigungselements in einander abgewandte Richtungen bewegbar sind.

Die Spreizelemente ragen in einem nicht gespreizten Ausgangszustand vorzugsweise in den Aufnahmekanal hinein.

Vorteilhaft kann es sein, wenn ein oder mehrere Spreizelemente eine oder mehrere Betätigungsflächen, beispielsweise Schrägflächen, aufweisen, an welchen das Befestigungselement zur Betätigung des einen oder der mehreren Spreizelemente angreift und mittels welchen das eine oder die mehreren Spreizelemente aus einer Ausgangsstellung in eine Spreizstellung bringbar sind.

Günstig kann es sein, wenn ein oder mehrere Spreizelemente mittels eines Schraubenkopfs eines als Schraube ausgebildeten Befestigungselements aus dem Aufnahmekanal heraus nach außen bewegbar sind, um letztlich in einem Bauteil beispielsweise klemmend festgelegt zu werden.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung einer ersten Ausführungsform eines Verbindungsmittels, bei welcher ein Grundkörper zur Aufnahme eines Befestigungselements vorgesehen ist, wobei das Befestigungselement durch eine Einbringöffnung in den Grundkörper einbringbar ist und in einem montierten Zustand des Verbindungsmittels teilweise aus einer Festlegungsöffnung des Grundkörpers herausragt; dies ist ein Beispiel, das nicht Teil des beanspruchten Gegenstands ist, sondern nur zur besseren Erläuterung der Erfindung dient.
- Fig. 2: eine schematische perspektivische Darstellung des Verbindungsmittels aus Fig. 1, wobei ein Grundkörper des Verbindungsmittels in einem Längsschnitt dargestellt ist;
- Fig. 3: eine schematische Seitenansicht des Verbindungsmittels mit dem geschnittenen Grundkörper aus Fig. 2;
- Fig. 4: eine schematische Draufsicht auf eine Oberseite des Verbindungsmittels aus Fig. 1;
- Fig. 5: eine schematische Draufsicht auf eine Stirnseite des Verbindungsmittels aus Fig. 1 ;
- Fig. 6: eine schematische Draufsicht auf ein der Stirnseite gegenüberliegendes Ende des Grundkörpers;
- Fig. 7: eine vergrößerte schematische perspektivische Darstellung der Stirnseite des Grundkörpers des Verbindungsmittels aus Fig. 1;
- Fig. 8: eine schematische perspektivische Darstellung eines Bauteils, welches eine Ausnehmung zur Aufnahme des Grundkörpers des Verbindungsmittels aus Fig. 1 aufweist;
- Fig. 9: eine der Fig. 8 entsprechende schematische perspektivische Darstellung des Bauteils samt eines in der Ausnehmung angeordneten Verbindungsmittels;
- Fig. 10: einen schematischen Längsschnitt durch das Verbindungsmittel aus Fig. 1, wobei ein als Schraube ausgebildetes Befestigungselement durch eine Einbringöffnung des Grundkörpers in den Grundkörper eingebracht wird;

- Fig. 11: eine der Fig. 10 entsprechende schematische Darstellung des Verbindungsmittels, wobei das Befestigungselement durch eine Betätigungsöffnung des Grundkörpers hindurch mittels eines Werkzeugs betätigt wird;
- Fig. 12: eine der Fig. 10 entsprechende schematische Darstellung des Verbindungsmittels, wobei das Befestigungselement mittels des Werkzeugs in einen verbundenen Zustand gebracht wurde, in welchem das Befestigungselement an dem weiteren Bauteil oder einem in dem weiteren Bauteil angeordneten Gegenstück angreift, um die zwei Bauteile miteinander zu verbinden;
- Fig. 13: eine der Fig. 1 entsprechende schematische perspektivische Darstellung einer zweiten Ausführungsform eines Verbindungsmittels, bei welcher ein Grundkörper mit einer schräg zur Verbindungsrichtung verlaufenden Stirnseite vorgesehen ist; dies ist ein Beispiel, das nicht Teil des beanspruchten Gegenstands ist, sondern nur zur besseren Erläuterung der Erfindung dient.
- Fig. 14: eine der Fig. 12 entsprechende schematische Schnittdarstellung des Verbindungsmittels aus Fig. 13 samt zweier mittels dieses Verbindungsmittels miteinander verbundener Bauteile;
- Fig. 15: eine schematische perspektivische Darstellung einer dritten Ausführungsform eines Verbindungsmittels, bei welcher ein Grundkörper mit einem Verankerungsbolzen und mehreren Positioniervorsprüngen versehen ist; dies ist ein Beispiel, das nicht Teil des beanspruchten Gegenstands ist, sondern nur zur besseren Erläuterung der Erfindung dient.
- Fig. 16: eine schematische Draufsicht auf den Grundkörper des Verbindungsmittels aus Fig. 15;
- Fig. 17: eine schematische Seitenansicht des Grundkörpers des Verbindungsmittels aus Fig. 15;

- Fig. 18: eine schematische Draufsicht auf eine Stirnseite des Grundkörpers des Verbindungsmittels aus Fig. 15;
- Fig. 19: eine schematische perspektivische Darstellung eines als Einschiebeplatte ausgebildeten Gegenstücks zur Festlegung an einem weiteren der beiden Bauteile und zur Verbindung mit einem Befestigungselement eines Verbindungsmittels;
- Fig. 20: eine schematische perspektivische Darstellung eines als Einschlagmuffe ausgebildeten Gegenstücks;
- Fig. 21: eine schematische perspektivische Darstellung eines als Rampamuffe ausgebildeten Gegenstücks;
- Fig. 22: eine schematische perspektivische Darstellung eines als Einschlagmutter ausgebildeten Gegenstücks;
- Fig. 23: eine schematische perspektivische Darstellung eines als Einleimmutter ausgebildeten Gegenstücks;
- Fig. 24: eine schematische perspektivische Darstellung einer vierten Ausführungsform eines Verbindungsmittels, bei welcher eine Spreizvorrichtung zum Verankern eines Grundkörpers des Verbindungsmittels in einem Bauteil vorgesehen ist, wobei ein Spreizelement der Spreizvorrichtung in einer nicht gespreizten Ausgangsstellung vorliegt; dies ist ein Beispiel, das nicht Teil des beanspruchten Gegenstands ist, sondern nur zur besseren Erläuterung der Erfindung dient.
- Fig. 25: eine der Fig. 24 entsprechende schematische Darstellung der vierten Ausführungsform des Verbindungsmittels, wobei das Spreizelement mittels des Befestigungselements betätigt und in eine gespreizte Stellung gebracht wurde;

- Fig. 26: eine schematische Draufsicht auf eine Stirnseite des Grundkörpers des Verbindungsmittels aus Fig. 24 in einem nicht gespreizten Ausgangszustand;
- Fig. 27: eine der Fig. 26 entsprechende schematische Darstellung des Verbindungsmittels aus Fig. 24 in einem gespreizten Zustand der Spreizvorrichtung;
- Fig. 28: eine schematische Draufsicht auf ein der Stirnseite abgewandtes Ende des Grundkörpers des Verbindungsmittels aus Fig. 24, mit Blick in einen Aufnahmekanal des Grundkörpers, in welchen zwei Spreizelemente der Spreizvorrichtung hineinragen;
- Fig. 29: eine der Fig. 3 entsprechende schematische Darstellung des Verbindungsmittels aus Fig. 24, wobei ein Spreizelement der Spreizvorrichtung mittels des Befestigungselements in die gespreizte Stellung gebracht wurde;
- Fig. 30: eine schematische perspektivische Darstellung einer fünften Ausführungsform eines Verbindungsmittels, bei welchem mehrere zumindest abschnittsweise zylinderförmige Verankerungsabschnitte vorgesehen sind; diese Ausführungsform ist Teil des beanspruchten Gegenstands; und
- Fig. 31: eine der Fig. 30 entsprechende schematische Darstellung einer sechsten Ausführungsform eines Verbindungsmittels, bei welcher unter anderem ein Kragen zum Abdecken eines Rands einer Ausnehmung in einem Bauteil und eine als Einbringöffnung dienende Betätigungsöffnung vorgesehen sind. Diese Ausführungsform ist die Teil des beanspruchten Gegenstands.

Gleiche oder funktional äquivalente Elemente sind in sämtlichen Figuren mit denselben Bezugszeichen versehen.

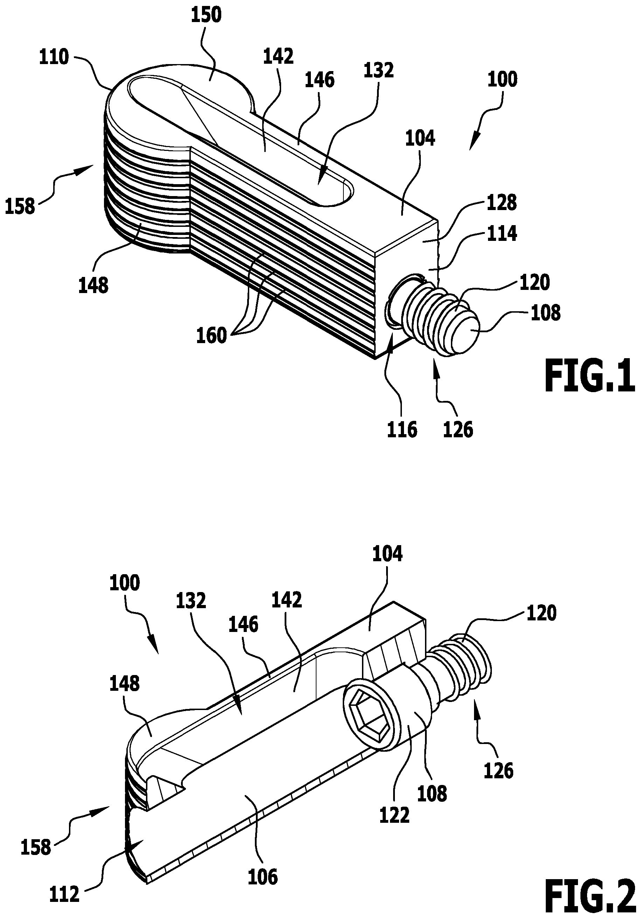

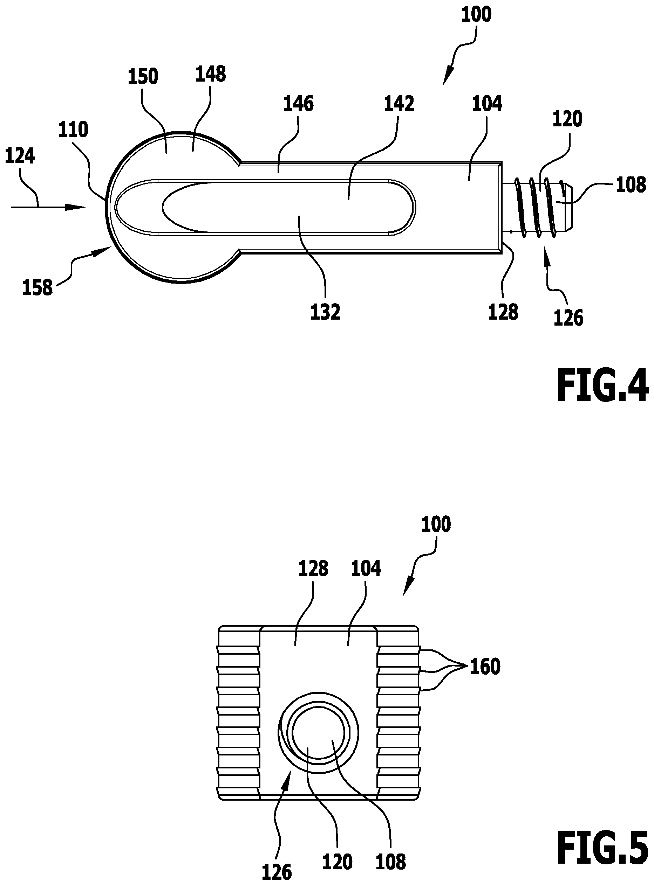

Eine in den Fig. 1 bis 12 dargestellte erste Ausführungsform eines als Ganzes mit 100 bezeichneten Verbindungsmittels dient beispielsweise dem Verbinden von zwei Bauteilen 102, insbesondere Möbelteile oder Maschinenteile. Dies ist ein Beispiel, das nicht Teil des beanspruchten Gegenstands ist, sondern nur zur besseren Erläuterung der Erfindung dient.

Das Verbindungsmittel 100 umfasst einen Grundkörper 104, welcher insbesondere einstückig als ein Kunststoff-Spritzgussbauteil oder als ein Metall-Druckgussbauteil ausgebildet ist.

Der Grundkörper 104 umfasst einen Aufnahmekanal 106 zur Aufnahme eines Befestigungselements 108. Der Aufnahmekanal 106 erstreckt sich vorzugsweise durch den Grundkörper 104 hindurch.

Ein Ende 110 des Aufnahmekanals 106 bildet vorzugsweise eine Einbringöffnung 112 des Grundkörpers 104, durch welche das Befestigungselement 108 in den Aufnahmekanal 106 des Grundkörpers 104 eingeführt werden kann.

Ein weiteres Ende 114 des Aufnahmekanals 106 bildet vorzugsweise eine Festlegungsöffnung 116 des Grundkörpers 104.

An und/oder in dieser Festlegungsöffnung 116 ist das Befestigungselement 108 festlegbar oder festgelegt, um die beiden Bauteile 102 miteinander zu verbinden.

Die Einbringöffnung 112 ist vorzugsweise größer dimensioniert als die Festlegungsöffnung 116.

Insbesondere ist vorgesehen, dass das Befestigungselement 108 vollständig durch die Einbringöffnung 112 hindurchgeführt werden kann, während lediglich ein Teil des Befestigungselements 108 durch die Festlegungsöffnung 116 hindurchpasst.

Im montierten Zustand des Verbindungsmittels 100 ragt somit das Befestigungselement 108 vorzugsweise nur teilweise aus der Festlegungsöffnung 116 heraus.

An dem der Festlegungsöffnung 116 zugewandten Ende 114 des Aufnahmekanals 106 weist dieser vorzugsweise einen Verjüngungsabschnitt 118 auf. Dieser Verjüngungsabschnitt 118 wird vorzugsweise mittels des Befestigungselements 108 hintergriffen, um ein unerwünschtes Herausschieben oder Herausziehen des Befestigungselements 108 durch die Festlegungsöffnung 116 hindurch zu verhindern.

Das Befestigungselement 108 ist beispielsweise eine Schraube 120.

Ein Schraubenkopf 122 der Schraube 120 ist vorzugsweise so dimensioniert, dass dieser nicht durch den Verjüngungsabschnitt 118 hindurchpasst, sondern diesen bezüglich einer Verbindungsrichtung 124 des Verbindungsmittels 100 hintergreift.

Ein Gewindeabschnitt 126 der Schraube 120 ist hingegen vorzugsweise so dimensioniert, dass dieser durch den Verjüngungsabschnitt 118 hindurchgeführt werden kann und somit aus der Festlegungsöffnung 116 herausragen kann.

Die Festlegungsöffnung 116 ist vorzugsweise in einer Stirnseite 128 des Grundkörpers 104 angeordnet und/oder ausgebildet.

Die Stirnseite 128 ist bei der in den Fig. 1 bis 12 dargestellten Ausführungsform des Verbindungsmittels 100 im Wesentlichen senkrecht zur Verbindungsrichtung 124 ausgerichtet. Dies ist ein Beispiel, das nicht Teil des beanspruchten Gegenstands ist, sondern nur zur besseren Erläuterung der Erfindung dient.

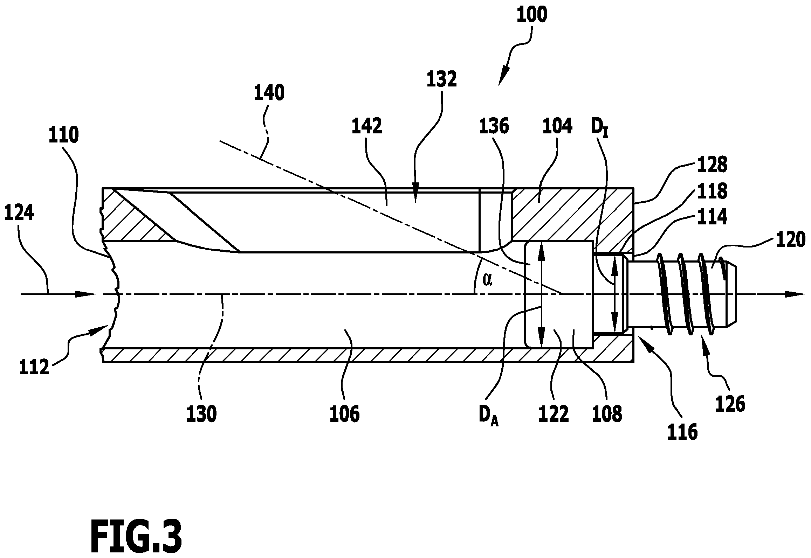

Wie insbesondere den Fig. 2 und 3 zu entnehmen ist, ist der Aufnahmekanal 106 des Verbindungsmittels 100 beispielsweise im Wesentlichen rotationssymmetrisch um eine Rotationsachse 130 ausgebildet.

Die Rotationsachse 130 ist dabei vorzugsweise zugleich eine Rotationsachse 130, um welche das Befestigungselement 108 zum Verbinden der zwei Bauteile 102 drehbar ist.

In einer senkrecht zur Rotationsachse 130 verlaufenden Richtung weist der Schraubenkopf 122 des als Schraube 120 ausgebildeten Befestigungselements 108 vorzugsweise einen Außendurchmesser D_{A} auf, welcher größer ist als ein Innendurchmesser D_{I} des Verjüngungsabschnitts 118 des Grundkörpers 104.

Zusätzlich zu der Einbringöffnung 112 und der Festlegungsöffnung 116 umfasst der Grundkörper 104 vorzugsweise eine Betätigungsöffnung 132.

Durch diese Betätigungsöffnung 132 ist vorzugsweise ebenfalls der Aufnahmekanal 106 zugänglich.

Insbesondere ist vorgesehen, dass durch die Betätigungsöffnung 132 das Befestigungselement 108, welches in dem Aufnahmekanal 106 angeordnet ist, zugänglich ist.

Ein Werkzeug 134 ist vorzugsweise durch die Betätigungsöffnung 132 hindurch mit dem Befestigungselement 108 in Eingriff bringbar, insbesondere um dieses zu betätigen.

Das Befestigungselement 108 weist vorzugsweise einen Angriffsabschnitt 136 auf, an welchem das Werkzeug 134 zum Betätigen des Befestigungselements 108 angreifen kann.

Der Angriffsabschnitt 136 ist beispielsweise eine Innensechskantaufnahme oder Innensechsrundaufnahme, an welcher beispielsweise ein komplementär hierzu ausgebildeter Kugelkopf 138 des Werkzeugs 134 angreifen kann.

Wie insbesondere den Fig. 3, 11 und 12 zu entnehmen ist, ist das Werkzeug 134 zum Betätigen des Befestigungselements 108 um eine schräg zur Rotationsachse 130 ausgerichtete Angriffsachse 140 drehbar.

Beispielsweise kann hierbei ein Winkel α (alpha) von ungefähr 30° zwischen der Rotationsachse 130 und der Angriffsachse 140 vorgesehen sein.

Das Werkzeug 134 ist somit insbesondere schräg durch die Betätigungsöffnung 132 hindurchführbar.

Die Betätigungsöffnung 132 ist daher vorzugsweise als ein Betätigungsschlitz 142 ausgebildet.

Der Kugelkopf 138 und der Angriffsabschnitt 136 bilden vorzugsweise ein Winkelgetriebe 144, mit welchem die Rotationsbewegung des Werkzeugs 134 auf das Befestigungselement 108 übertragbar ist.

Zur Verankerung des Grundkörpers 104 in einem Bauteil 102 weist der Grundkörper 104 vorzugsweise einen Basisabschnitt 146 und einen oder mehrere von dem Basisabschnitt 146 hervorstehende oder hervorragende Verankerungsabschnitte 148 auf.

Ein Verankerungsabschnitt 148 kann beispielsweise als eine zylinderförmige Verdickung 150 des der Stirnseite 128 abgewandten Endes 110 des Grundkörpers 104 ausgebildet sein.

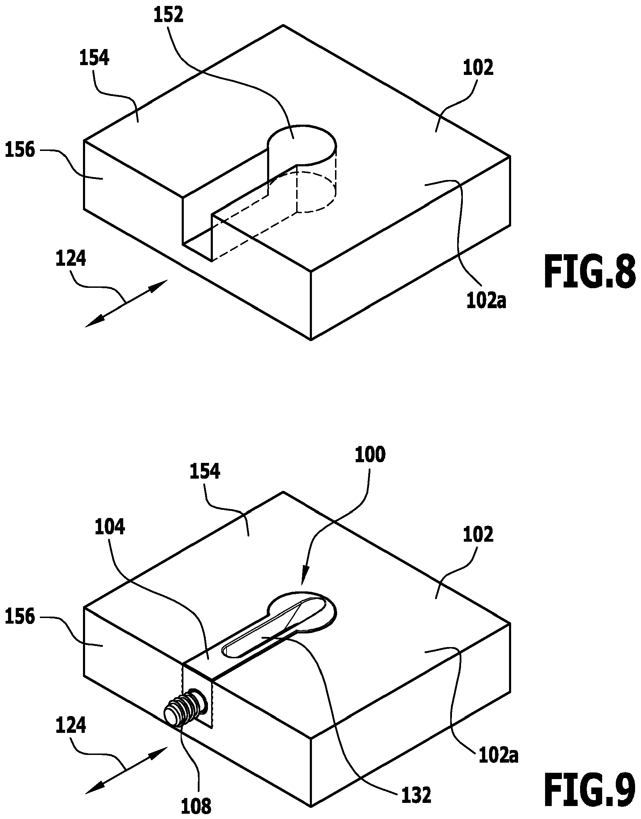

Der eine oder die mehreren Verankerungsabschnitte 148 ragen insbesondere in einer oder mehreren senkrecht zur Verbindungsrichtung 124 verlaufenden Richtungen von dem Basisabschnitt 146 weg, so dass der Grundkörper 104 insbesondere formschlüssig in einer komplementär zu dem Grundkörper 104 ausgebildeten Ausnehmung 152 in einem Bauteil 102 festlegbar ist (siehe insbesondere die Fig. 8 und 9).

Wie insbesondere Fig. 8 zu entnehmen ist, ist die Ausnehmung 152 vorzugsweise derart in einem Bauteil 102 angeordnet und/oder ausgebildet, dass sich die Ausnehmung 152 sowohl in einer Hauptseite 154 als auch in einer Schmalseite 156 des Bauteils 102 erstreckt. Die Ausrichtung der Ausnehmung 152 ist dabei vorzugsweise so gewählt, dass die Verbindungsrichtung 124 zumindest näherungsweise senkrecht zu der Schmalseite 156 ausgerichtet ist.

Wie insbesondere aus einem Vergleich der Fig. 8 und 9 hervorgeht, sind die Ausnehmung 152 und der Grundkörper 104 vorzugsweise komplementär zueinander ausgebildet, so dass die Ausnehmung 152 mittels des Grundkörpers 104 im Wesentlichen vollständig ausfüllbar ist.

Eine dem Aufnahmekanal 106 abgewandte Außenseite 158 des Grundkörpers 104 ist vorzugsweise mit einer oder mehreren Verankerungsrippen 160 versehen.

Die Verankerungsrippen 160 sind insbesondere linienförmige Widerhaken, welche das Einbringen des Grundkörpers 104 in die Ausnehmung 152 ermöglichen, ein Entnehmen des Grundkörpers 104 aus der Ausnehmung 152 jedoch erschweren.

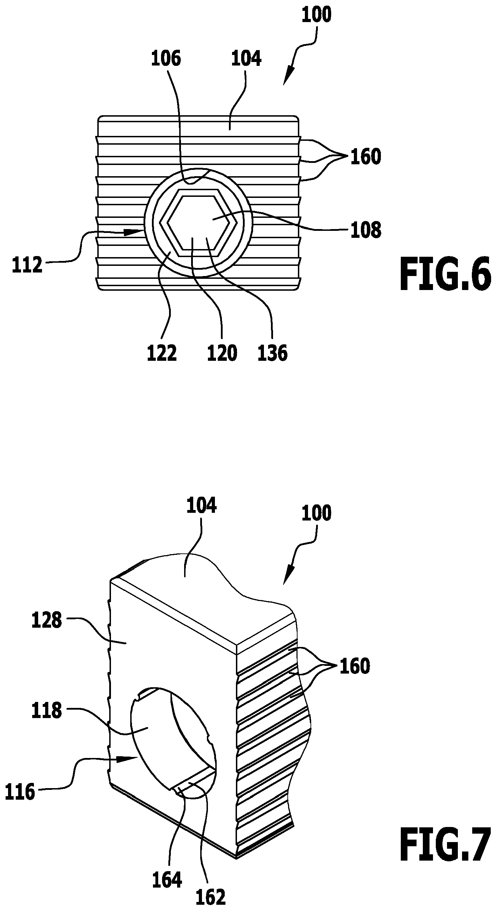

Wie insbesondere Fig. 7 zu entnehmen ist, kann vorgesehen sein, dass der Verjüngungsabschnitt 118 des Grundkörpers 104 einen oder mehrere Haltevorsprünge 162, beispielsweise Halterippen 164, umfasst.

Mittels dieser Haltevorsprünge 162 ist der Innendurchmesser D_{I} des Verjüngungsabschnitts 118 lokal reduziert, so dass insbesondere ein Gewindeabschnitt 126 eines als Schraube 120 ausgebildeten Befestigungselements 108 klemmend oder rastend in dem Verjüngungsabschnitt 118 aufnehmbar ist.

Das Befestigungselement 108 kann hierdurch an dem Grundkörper 104 gehalten und insbesondere gegen ein unerwünschtes Herausfallen aus dem Grundkörper 104 gesichert werden.

Die vorstehend beschriebene Ausführungsform eines Verbindungsmittels 100 , die nicht Teil des beanspruchten Gegenstands ist, sondern nur zur besseren Erläuterung der Erfindung dient,

funktioniert insbesondere wie folgt:
Zwei miteinander zu verbindende Bauteile 102 werden vorzugsweise dadurch vorbereitet, dass in ein erstes Bauteil 102a eine Ausnehmung 152 eingebracht wird (siehe insbesondere die Fig. 8).

Die Form der Ausnehmung 152 ist insbesondere komplementär zu der Form des Grundkörpers 104 des Verbindungsmittels 100 ausgebildet, so dass der Grundkörper 104 insbesondere formschlüssig in der Ausnehmung 152 festlegbar ist.

Der Formschluss bezieht sich dabei insbesondere auf die Verbindungsrichtung 124, in welcher eine die zwei Bauteile 102 später verbindende Kraft wirkt.

Die Ausnehmung 152 wird beispielsweise mittels einer Fräsmaschine in das erste Bauteil 102a eingebracht.

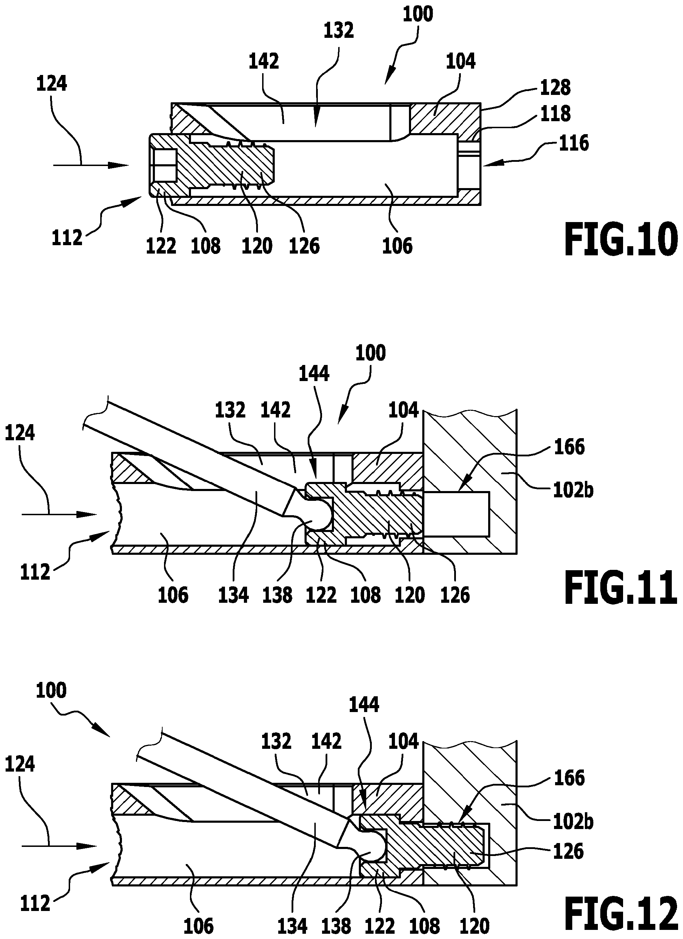

Ein zweites Bauteil 102b wird beispielsweise mit einer Bohrung 166 versehen (siehe insbesondere Fig. 11).

Das Verbindungsmittel 100 wird zur Montage desselben und der Bauteile 102 vorzugsweise dadurch vorbereitet, dass das beispielsweise als Schraube 120 ausgebildete Befestigungselement 108 durch die Einbringöffnung 112 in den Aufnahmekanal 106 des Grundkörpers 104 eingebracht wird.

Das Befestigungselement 108 wird dabei insbesondere soweit durch den Aufnahmekanal 106 hindurchgeschoben, bis das Befestigungselement 108 mit den Haltevorsprüngen 162 in Eingriff kommt und dadurch sicher an dem Grundkörper 104 gehalten wird.

Der Grundkörper 104 wird dann zusammen mit dem Befestigungselement 108 in die Ausnehmung 152 des ersten Bauteils 102a eingebracht.

Anschließend werden die beiden Bauteile 102 in der mittels des Verbindungsmittels 100 zu fixierenden Wunschposition angeordnet.

Insbesondere kann dabei ein aus der Festlegungsöffnung 116 herausragender Gewindeabschnitt 126 des als Schraube 120 ausgebildeten Befestigungselements 108 bereits abschnittsweise in die Bohrung 166 des zweiten Bauteils 102b eingeschoben werden.

In einem nächsten Schritt wird das Werkzeug 134 durch die Betätigungsöffnung 132 hindurchgeführt und mit dem Angriffsabschnitt 136 des Befestigungselements 108 in Eingriff gebracht.

Durch Drehen des Werkzeugs 134 kann dann das Befestigungselement 108 in Rotation versetzt werden.

Insbesondere wird das Befestigungselement 108 hierdurch in die Bohrung 166 des zweiten Bauteils 102b eingeschraubt.

Die zwei Bauteile 102 werden hierdurch fest miteinander verbunden.

Eine Kraftübertragung längs der Verbindungsrichtung 124 erfolgt dann einerseits zwischen dem zweiten Bauteil 102b und dem Gewindeabschnitt 126 des als Schraube ausgebildeten Befestigungselements 108 und andererseits zwischen dem Verankerungsabschnitt 148 des Grundkörpers 104 und der Ausnehmung 152 in dem ersten Bauteil 102a.

Die Kraftübertragung zwischen dem Grundkörper und dem Befestigungselement 108 erfolgt zwischen dem Schraubenkopf 122 und dem Verjüngungsabschnitt 118.

Durch geeignete Ausgestaltung des Verankerungsabschnitts 148 können vorzugsweise auch große Kräfte von dem ersten Bauteil 102 oder auf das erste Bauteil 102 übertragen werden, ohne ein unerwünschtes Ausreißen der Ausnehmung 152 im Bereich der Schmalseite 156 befürchten zu müssen. Insbesondere kann durch die Anordnung des Verankerungsabschnitts 148 oder der Verankerungsabschnitte 148 an dem der Festlegungsöffnung 116 abgewandten Ende 110 des Grundkörpers 104 bewirkt werden, dass die auf das erste Bauteil 102a wirkenden Kräfte in einem großen Abstand von der Schmalseite 156 übertragen werden.

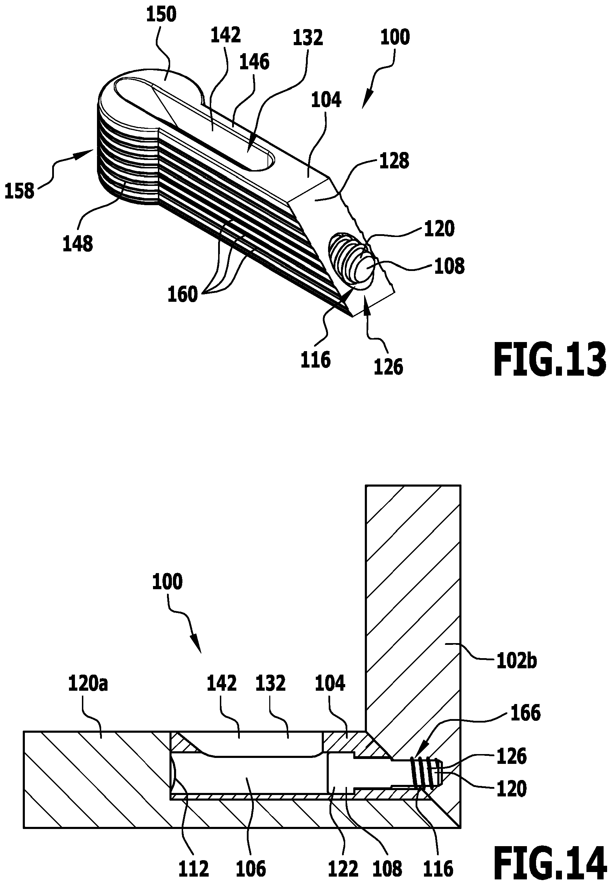

Eine in den Fig. 13 und 14 dargestellte zweite Ausführungsform eines Verbindungsmittels 100 unterscheidet sich von der in den Fig. 1 bis 12 dargestellten ersten Ausführungsform im Wesentlichen dadurch, dass die Stirnseite 128 des Grundkörpers 104 schräg zur Verbindungsrichtung 124 ausgerichtet ist.

Beide Ausführungsformen sind Beispiele, die nicht Teil des beanspruchten Gegenstands sind, sondern nur zur besseren Erläuterung der Erfindung dienen.

Das Verbindungsmittel 100 gemäß der in den Fig. 13 und 14 dargestellten zweiten Ausführungsform eignet sich insbesondere zur Verbindung zweier mit Gehrung versehener Bauteile 102.

Insbesondere ist die Stirnseite 128 des Grundkörpers 104 um 45° geneigt zur Verbindung 124 ausgerichtet, so dass sich das Verbindungsmittel 100 insbesondere zur Verbindung zweier im 90°-Winkel zueinander anzuordnender Bauteile 102 eignet, wenn diese Bauteile 102 jeweils mit einer 45°-Gehrung versehen sind.

Im Übrigen stimmt die in den Fig. 13 und 14 dargestellte zweite Ausführungsform des Verbindungsmittels 100 hinsichtlich Aufbau und Funktion mit der in den Fig. 1 bis 12 dargestellten ersten Ausführungsform überein, so dass auf deren vorstehende Beschreibung insoweit Bezug genommen wird.

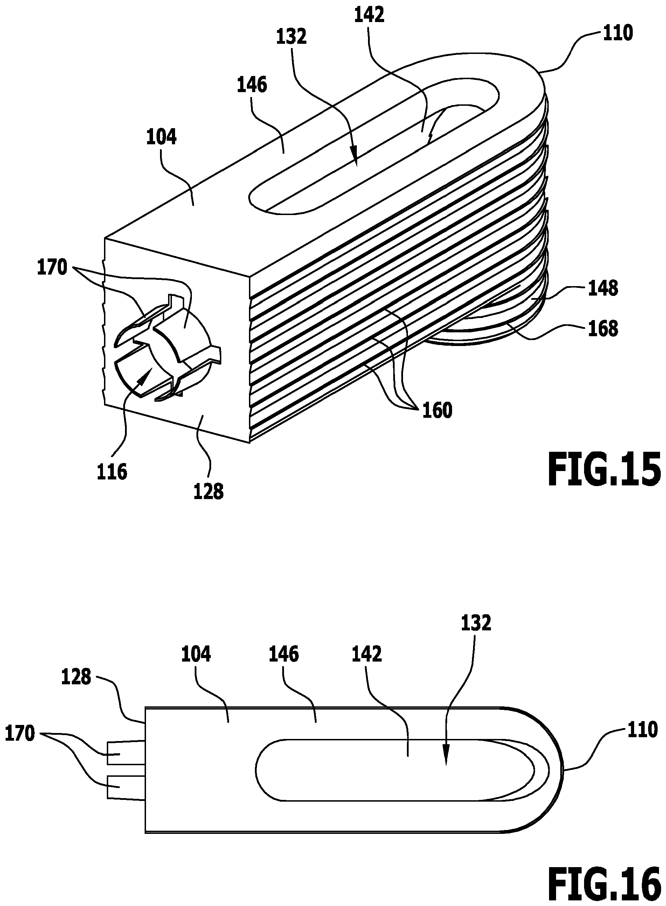

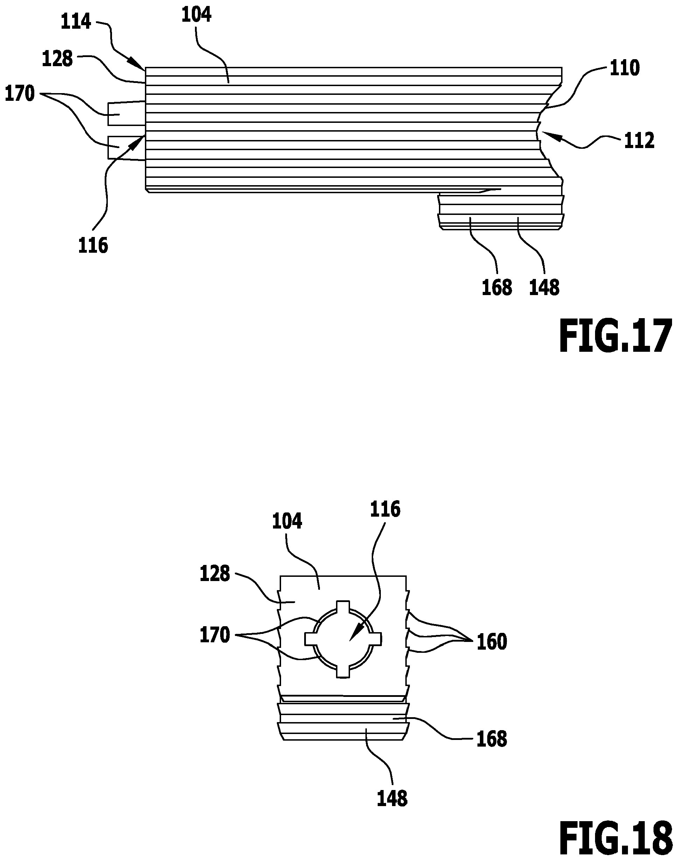

Eine in den Fig. 15 bis 18 dargestellte dritte Ausführungsform eines Verbindungsmittels 100 unterscheidet sich von der in den Fig. 1 bis 12 dargestellten ersten Ausführungsform im Wesentlichen dadurch, dass der Grundkörper 104 anstelle der zylinderförmigen Verdickung 150 einen Verankerungsbolzen 168 aufweist. Beide Ausführungsformen sind Beispiele, die nicht Teil des beanspruchten Gegenstands sind, sondern nur zur besseren Erläuterung der Erfindung dienen.

Der Verankerungsbolzen 168 erstreckt sich insbesondere senkrecht zu einer Hauptseite 154 des ersten Bauteils 102a, in welchem der Grundkörper 104 festlegbar ist, von dem Basisabschnitt 146 des Grundkörpers 104 weg.

Der Verankerungsbolzen 168 ist vorzugsweise an dem der Festlegungsöffnung 116 abgewandten Ende 110 des Grundkörpers 104 angeordnet.

Ferner ist bei der in den Fig. 15 bis 18 dargestellten dritten Ausführungsform des Verbindungsmittels 100 vorgesehen, dass der Grundkörper 104 einen oder mehrere, beispielsweise vier, Positioniervorsprünge 170 umfasst.

Die Positioniervorsprünge 170 sind insbesondere an der Stirnseite 128 des Grundkörpers 104 angeordnet und bilden beispielsweise eine ringförmige Erweiterung der Festlegungsöffnung 116 und/oder des Verjüngungsabschnitts 118.

Die Positioniervorsprünge 170 dienen insbesondere dazu, den Grundkörper 104 unabhängig von dem Befestigungselement 108 relativ zu einer Bohrung 166 im zweiten Bauteil 102b zu positionieren, indem die Positioniervorsprünge 170 bei der Ausrichtung der Bauteile 102 relativ zueinander bereits vor der Festlegung des Befestigungselements 108 in die Bohrung 166 des zweiten Bauteils 102b eingeführt werden.

Im Übrigen stimmt die in den Fig. 15 bis 18 dargestellte dritte Ausführungsform des Verbindungsmittels 100 hinsichtlich Aufbau und Funktion mit der in den Fig. 1 bis 12 dargestellten ersten Ausführungsform überein, so dass auf deren vorstehende Beschreibung insoweit Bezug genommen wird.

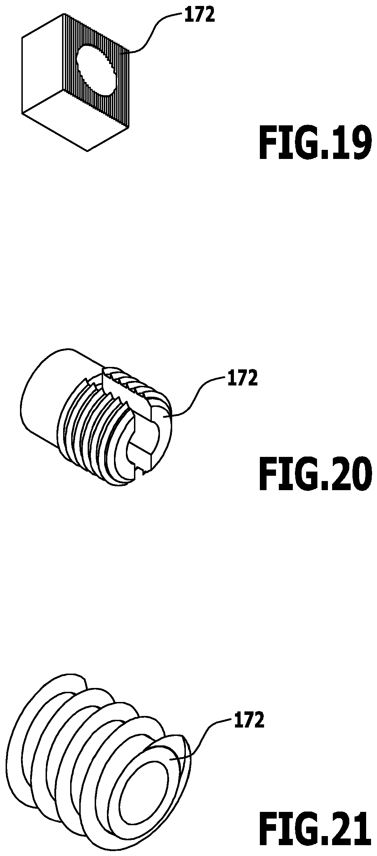

In den Fig. 19 bis 23 sind optionale Gegenstücke 172 des Verbindungsmittels 100 dargestellt.

Die dargestellten Gegenstücke 172 kommen insbesondere einzeln in Kombination mit einem Grundkörper 104 und einem Befestigungselement 108 zum Einsatz, wenn das Befestigungselement 108 aus beliebigen Gründen nicht unmittelbar an dem zweiten Bauteil 102b festgelegt werden soll.

In diesen Fällen wird eines der Gegenstücke 172 oder auch ein nicht dargestelltes Gegenstück 172 an dem zweiten Bauteil 102b festgelegt, beispielsweise verschraubt, verrastet, verklebt, etc.

Das Befestigungselement 108 greift dann nicht unmittelbar an dem zweiten Bauteil 102b an, um die beiden Bauteile 102 miteinander zu verbinden. Vielmehr wird das Befestigungselement 108 dann vorzugsweise mit dem Gegenstück 172 in und/oder an dem zweiten Bauteil 102b in Eingriff gebracht.

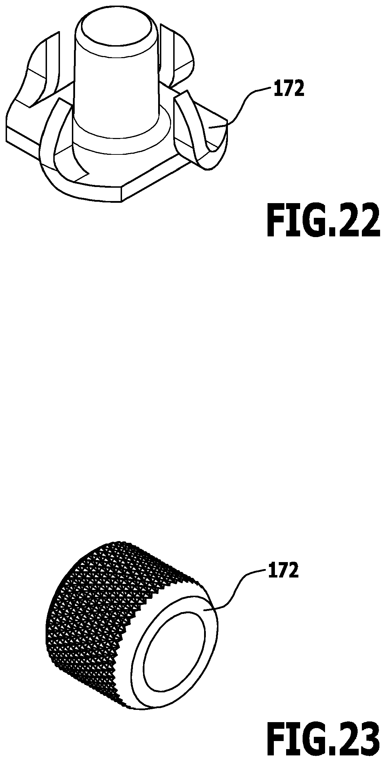

Das Gegenstück 172 kann dabei beispielsweise eine Einschiebeplatte (siehe Fig. 19), eine Einschlagmuffe (siehe Fig. 20), eine Rampamuffe (siehe Fig. 21), eine Einschlagmutter (siehe Fig. 22) oder eine Einleimmutter (siehe Fig. 23) sein.

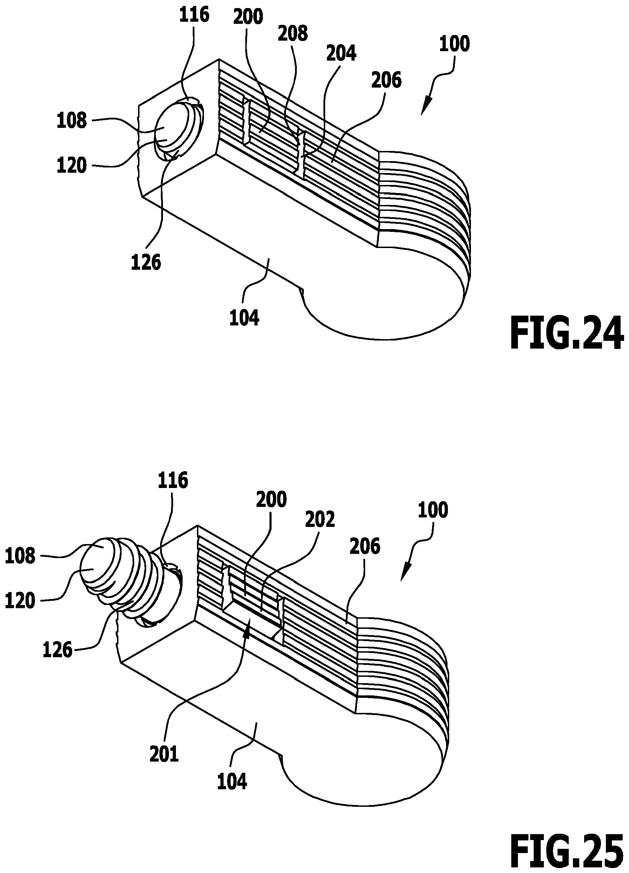

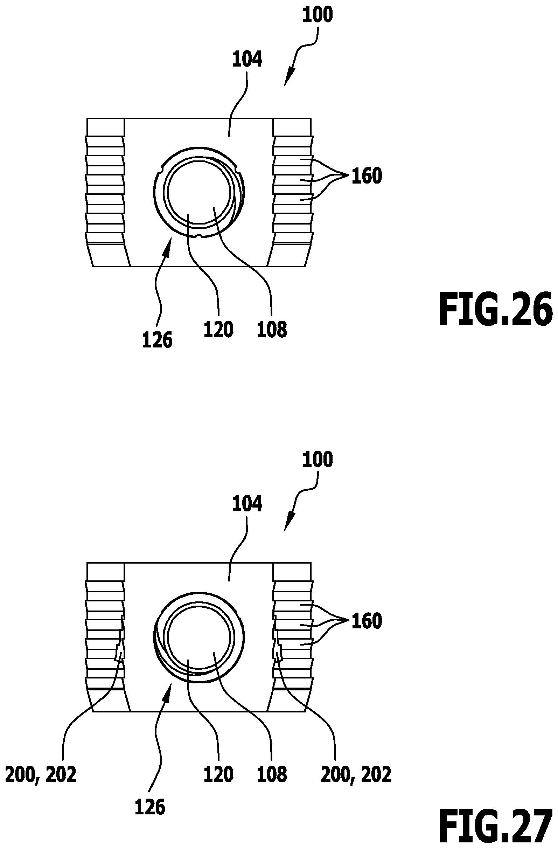

Eine in den Fig. 24 bis 29 dargestellte vierte Ausführungsform eines Verbindungsmittels 100 unterscheidet sich von der in den Fig. 1 bis 12 dargestellten ersten Ausführungsform im Wesentlichen dadurch, dass zwei Spreizelemente 200 einer Spreizvorrichtung 201 vorgesehen sind. Beide Ausführungsformen sind Beispiele, die nicht Teil des beanspruchten Gegenstands sind, sondern nur zur besseren Erläuterung der Erfindung dienen.

Die Spreizelemente 200 sind insbesondere Schwenkelemente 202, welche einstückig mit dem Grundkörper 104 ausgebildet sind und bezüglich des Aufnahmekanals 106 bewegbar, insbesondere schwenkbar, an dem Grundkörper 104 festgelegt sind.

Wie insbesondere aus einem Vergleich der Fig. 24 und 25 hervorgeht, sind die Spreizelemente 200 insbesondere einerseits in der in Fig. 24 dargestellten Ausgangsstellung und andererseits in der in Fig. 25 dargestellten Spreizstellung anordenbar.

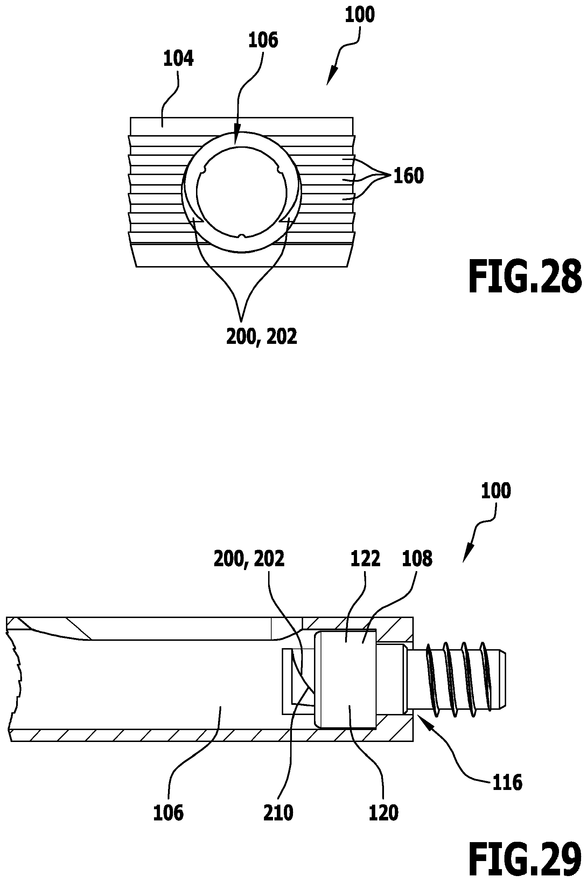

In der Ausgangsstellung ragen die Spreizelemente 200 insbesondere in den Aufnahmekanal 106 hinein (siehe insbesondere Fig. 28). In der Spreizstellung hingegen sind die Spreizelemente 200 mittels des Schraubenkopfs 122 des als Schraube 120 ausgebildeten Befestigungselements 108 aus dem Aufnahmekanal 106 nach außen bewegt. Die Spreizelemente 200 ragen somit in der Spreizstellung über eine Außenkontur des Grundkörpers 104 hervor.

Im montierten Zustand des Verbindungsmittels 100 in einem Bauteil 102 werden die Spreizelemente 200 mittels des Befestigungselements 108 in das Bauteil 102 hineingedrückt.

Hierdurch kann insbesondere eine stabile klemmende und/oder verankernde Festlegung des Grundkörpers 104 in dem Bauteil 102 erzielt werden.

Die Spreizelemente 200 sind beispielsweise durch C-förmig Ausnehmungen 204 in Seitenwänden 206 des Grundkörpers 104 ausgebildet.

Insbesondere sind C-förmige Trennschlitze 208 in dem Grundkörper 104 vorgesehen, um die Spreizelemente 200 zu bilden.

Wie insbesondere Fig. 29 zu entnehmen ist, umfassen die Spreizelemente 200 vorzugsweise jeweils eine oder mehrere Schrägflächen 210, an welchen das Befestigungselement 108, insbesondere der Schraubenkopf 122, angreift, um die Spreizelemente 200 aus der Ausgangsstellung in die Spreizstellung zu bringen.

Die Spreizelemente 200 sind vorzugsweise elastisch nachgiebig ausgebildet und/oder angeordnet.

Wenn das Befestigungselement 108 aus der Festlegungsöffnung 116 entfernt wird, bewegen sich die Spreizelemente 200 somit vorzugsweise automatisch aus der Spreizstellung zurück in die Ausgangsstellung.

Im Übrigen stimmt die in den Fig. 24 bis 29 dargestellte vierte Ausführungsform des Verbindungsmittels 100 hinsichtlich Aufbau und Funktion mit der in den Fig. 1 bis 12 dargestellten ersten Ausführungsform überein, so dass auf deren vorstehende Beschreibung insoweit Bezug genommen wird.

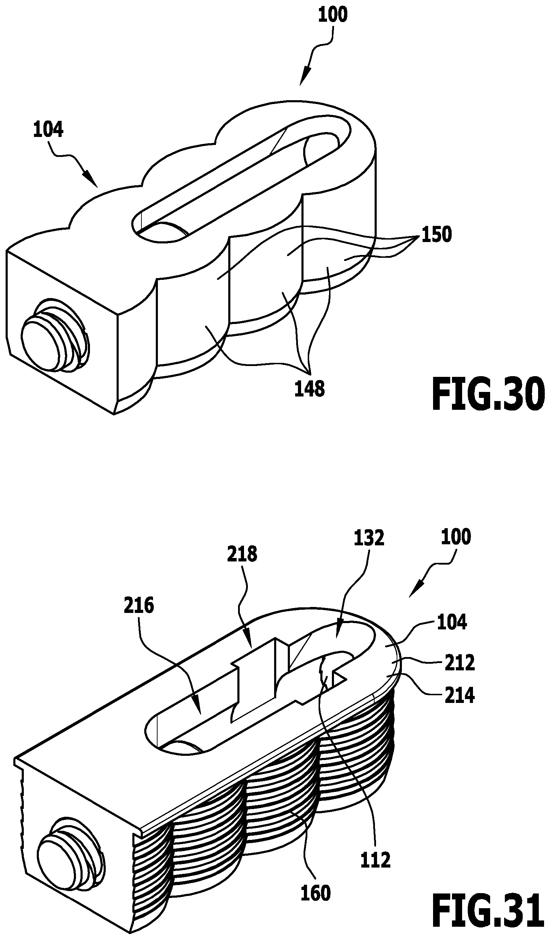

Eine in Fig. 30 dargestellte fünfte Ausführungsform eines Verbindungsmittels 100 unterscheidet sich von der in den Fig. 1 bis 12 dargestellten ersten Ausführungsform im Wesentlichen dadurch, dass das Verbindungsmittel 100 mehrere, beispielsweise drei oder vier, Verankerungsabschnitte 148 umfasst, welche insbesondere als zumindest abschnittsweise zylinderförmige Verdickungen 150 ausgebildet sind.

Vorzugsweise überlappen sich die Verankerungsabschnitte 148 derart, dass der Grundkörper 104 in einem Querschnitt beispielsweise wolkenförmig ist.

Verankerungsrippen 160 sind bei der in Fig. 30 dargestellten fünften Ausführungsform des Verbindungsmittels 100 nicht vorgesehen. Es kann jedoch bei einer weiteren (nicht dargestellten) Ausführungsform durchaus auch die in Fig. 30 dargestellte Wolkenform in Kombination mit Verankerungsrippen 160 vorgesehen sein.

Im Übrigen stimmt die in Fig. 30 dargestellte fünfte Ausführungsform des Verbindungsmittels 100 hinsichtlich Aufbau und Funktion mit der in den Fig. 1 bis 12 dargestellten ersten Ausführungsform überein, so dass auf deren vorstehende Beschreibung insoweit Bezug genommen wird.

Eine in Fig. 31 dargestellte sechste Ausführungsform eines Verbindungsmittels 100 unterscheidet sich von der in Fig. 30 dargestellten fünften Ausführungsform im Wesentlichen dadurch, dass der Grundkörper 104 mit Verankerungsrippen 160 versehen ist.

Zudem umfasst der Grundkörper 104 einen Abdeckabschnitt 212, mittels welchem insbesondere ein Rand der Ausnehmung 152 in einem Bauteil 102 abdeckbar ist.

Der Abdeckabschnitt 212 ist insbesondere als ein seitlich vorstehender Kragen 214 an dem Grundkörper 104 ausgebildet.

Der Abdeckabschnitt 212, insbesondere der Kragen 214, weist insbesondere eine geometrisch einfachere Form auf als die Verankerungsabschnitte 148 des Grundkörpers 104, wodurch insbesondere eine ästhetische Optik des Verbindungsmittels 100 im montierten Zustand desselben erzielt werden kann.

Ferner ist bei der in Fig. 31 dargestellten Ausführungsform des Verbindungsmittels 100 vorgesehen, dass die Betätigungsöffnung 132 zumindest abschnittsweise und/oder zumindest näherungsweise komplementär zu einer Außenkontur des Befestigungselements 108 ausgebildet ist.

Insbesondere umfasst die Betätigungsöffnung 132 einen schmalen Schlitzabschnitt 216 und einen im Vergleich hierzu breiteren Abschnitt 218.

Der Schlitzabschnitt 216 und der breitere Abschnitt 218 sind insbesondere so ausgebildet, dass ein als Schraube 120 ausgebildetes Befestigungselement 108 durch die Betätigungsöffnung 132 hindurch in den Aufnahmekanal 106 einbringbar ist.

Die Einbringöffnung 112 ist bei der in Fig. 31 dargestellten sechsten Ausführungsform des Verbindungsmittels 100 somit optional.

Im Übrigen stimmt die in Fig. 31 dargestellte sechste Ausführungsform des Verbindungsmittels 100 hinsichtlich Aufbau und Funktion mit der in Fig. 30 dargestellten fünften Ausführungsform überein, so dass auf deren vorstehende Beschreibung insoweit Bezug genommen wird.

Bei weiteren (nicht dargestellten) Ausführungsformen von Verbindungsmitteln 100 können einzelne oder mehrere Merkmale der vorstehend beschriebenen Ausführungsformen beliebig miteinander kombiniert sein.

Beispielsweise kann auch bei der in den Fig. 15 bis 18 dargestellten dritten Ausführungsform des Verbindungsmittels 100 eine schräg ausgerichtete Stirnseite 128 gemäß der in den Fig. 13 und 14 dargestellten zweiten Ausführungsform vorgesehen sein. Ferner kann beispielsweise auch bei der in den Fig. 1 bis 12 dargestellten Ausführungsform des Verbindungsmittels 100 ein Kragen 214 und/oder Abdeckabschnitt 212 zur Abdeckung eines Randbereichs der in dem Bauteil 102 angeordneten Ausnehmung 152 vorgesehen sein. Es ist jedoch zu beachten, dass die Erfindung auf den in den Ansprüchen definierten Gegenstand beschränkt ist.

### Bezugszeichenliste

- 100: Verbindungsmittel
- 102: Bauteil
- 102a: erstes Bauteil
- 102b: zweites Bauteil
- 104: Grundkörper
- 106: Aufnahmekanal
- 108: Befestigungselement
- 110: Ende
- 112: Einbringöffnung
- 114: Ende
- 116: Festlegungsöffnung
- 118: Verjüngungsabschnitt
- 120: Schraube
- 122: Schraubenkopf
- 124: Verbindungsrichtung
- 126: Gewindeabschnitt
- 128: Stirnseite
- 130: Rotationsachse
- 132: Betätigungsöffnung
- 134: Werkzeug
- 136: Angriffsabschnitt
- 138: Kugelkopf
- 140: Angriffsachse
- 142: Betätigungsschlitz
- 144: Winkelgetriebe
- 146: Basisabschnitt
- 148: Verankerungsabschnitt
- 150: Verdickung
- 152: Ausnehmung
- 154: Hauptseite

- 156: Schmalseite
- 158: Außenseite
- 160: Verankerungsrippe
- 162: Haltevorsprung
- 164: Halterippe
- 166: Bohrung
- 168: Verankerungsbolzen
- 170: Positioniervorsprung
- 172: Gegenstück
- 200: Spreizelement
- 201: Spreizvorrichtung
- 202: Schwenkelement
- 204: Ausnehmung
- 206: Seitenwand
- 208: Trennschlitz
- 210: Schrägfläche
- 212: Abdeckabschnitt
- 214: Kragen
- 216: Schlitzabschnitt
- 218: Abschnitt

- α(alpha): Winkel
- D_{A}: Außendurchmesser
- D_{I}: Innendurchmesser

## Patentansprüche

1. Verbindungsmittel (100) zur Verbindung zweier Bauteile (102), wobei das Verbindungsmittel (100) einen Grundkörper (104) umfasst, welcher einen sich durch den Grundkörper (104) hindurcherstreckenden Aufnahmekanal (106) zur Aufnahme eines Befestigungselements (108) umfasst, wobei der Aufnahmekanal (106) an einem Ende (110) durch eine Einbringöffnung (112) des Grundkörpers (104) und/oder an einem Ende (114), insbesondere einem weiteren Ende (114), durch eine Festlegungsöffnung (116) des Grundkörpers (104) zugänglich ist, wobei der Grundkörper (104) einen Basisabschnitt (146) und mehrere von dem Basisabschnitt (146) wegragende oder hervorstehende Verankerungsabschnitte (148) zur Verankerung des Grundkörpers (104) in einem der Bauteile (102) umfasst, wobei die mehreren Verankerungsabschnitte (148) als zumindest abschnittsweise zylinderförmige Verdickungen (150) ausgebildet sind und wobei die zumindest abschnittsweise zylinderförmigen Verdickungen (150) unmittelbar aneinander angrenzen und sich gegenseitig überlappen.

2. Verbindungsmittel (100) nach Anspruch 1, **dadurch gekennzeichnet, dass** der Grundkörper (104) eine von der Einbringöffnung (112) und/oder der Festlegungsöffnung (116) verschiedene Betätigungsöffnung (132) umfasst, durch welche das im Aufnahmekanal (106) angeordnete Befestigungselement (108) zur Betätigung desselben zugänglich ist, wobei die Betätigungsöffnung (132) insbesondere als ein Betätigungsschlitz (142) ausgebildet ist.

3. Verbindungsmittel (100) nach einem der Ansprüche 1 oder 2, **dadurch gekennzeichnet, dass** der Grundkörper (104) einstückig und/oder als ein Kunststoff-Spritzgussbauteil oder als ein Metall-Druckgussbauteil ausgebildet ist.

4. Verbindungsmittel (100) nach einem der Ansprüche 1 bis 3, **dadurch gekennzeichnet, dass** das Befestigungselement (108) eine Schraube (120) ist und
a) dass die Einbringöffnung (112) größer ist als ein Schraubenkopf (122) der Schraube (120) und/oder
b) dass die Festlegungsöffnung (116) kleiner ist als der Schraubenkopf (122) der Schraube (120) und/oder
c) dass die Festlegungsöffnung (116) größer ist als ein Gewindeabschnitt (126) der Schraube (120).

5. Verbindungsmittel (100) nach einem der Ansprüche 1 bis 4, **dadurch gekennzeichnet, dass** die Betätigungsöffnung (132) in mindestens einer Richtung kleiner ist als ein senkrecht zu einer Verbindungsrichtung (124) des Befestigungselements (108) genommener maximaler, minimaler und/oder durchschnittlicher Außendurchmesser (D_{A}) des Befestigungselements (108), insbesondere eines Schraubenkopfs (122) und/oder eines Gewindeabschnitts (126) eines als Schraube (120) ausgebildeten Befestigungselements (108).

6. Verbindungsmittel (100) nach einem der Ansprüche 1 bis 5, **dadurch gekennzeichnet, dass** das Befestigungselement (108) einen Angriffsabschnitt (136) umfasst, an welchem ein Benutzer des Verbindungsmittels (100) zur Betätigung des Befestigungselements (108) mittels eines Werkzeugs (134) angreifen kann, wobei vorzugsweise ein Werkzeug (134) zur Betätigung des Befestigungselements (108) zusammen mit dem Angriffsabschnitt (136) ein Winkelgetriebe (144) bildet.

7. Verbindungsmittel (100) nach einem der Ansprüche 1 bis 6, **dadurch gekennzeichnet, dass** mindestens ein Verankerungsabschnitt (148) als eine zylinderförmige Verdickung (150) eines der Festlegungsöffnung (116) abgewandten Endes (110) des Grundkörpers (104) ausgebildet ist und/oder dass mindestens ein Verankerungsabschnitt (148) vorzugsweise als ein senkrecht oder schräg zu einer Verbindungsrichtung (124) des Verbindungsmittels (100) von dem Basisabschnitt (146) wegragender Verankerungsbolzen (168) ausgebildet ist.

8. Verbindungsmittel (100) nach einem der Ansprüche 1 bis 7, **dadurch gekennzeichnet, dass** die Betätigungsöffnung (132) sich in einer parallel zu einer Verbindungsrichtung (124) des Verbindungsmittels (100) verlaufenden Richtung über mindestens ungefähr ein Drittel, insbesondere mindestens ungefähr die Hälfte, einer in der Verbindungsrichtung (124) genommenen Länge des Grundkörpers (104) erstreckt.

9. Verbindungsmittel (100) nach einem der Ansprüche 1 bis 8, **dadurch gekennzeichnet, dass** eine dem Aufnahmekanal (106) abgewandte Außenseite (158) des Grundkörpers (104) zumindest abschnittsweise mit Verankerungsrippen (160) zur Verankerung des Grundkörpers (104) in einem Bauteil (102) versehen ist.

10. Verbindungsmittel (100) nach einem der Ansprüche 1 bis 9, **dadurch gekennzeichnet, dass** das Verbindungsmittel (100) zusätzlich zu dem Befestigungselement (108) und dem an und/oder in einem ersten der zwei Bauteile (102) anordenbaren Grundkörper (104) ein an und/oder in einem zweiten der zwei Bauteile (102) festlegbares Gegenstück (172) umfasst, wobei zur Verbindung der zwei Bauteile (102) das Befestigungselement (108) mit dem Gegenstück (172) in Eingriff bringbar ist.

11. Verbindungsmittel (100) nach einem der Ansprüche 1 bis 10, **dadurch gekennzeichnet, dass** der Grundkörper (104) eine, zwei oder mehr Positioniervorsprünge (170) umfasst, welche sich in einem Bereich der Festlegungsöffnung (116) in der Verbindungsrichtung (124) von dem Grundkörper (104) weg erstrecken.

12. Verbindungsmittel (100) nach einem der Ansprüche 1 bis 11, **dadurch gekennzeichnet, dass** das Verbindungsmittel (100) ein oder mehrere Spreizelemente (200) zur Verankerung des Grundkörpers (104) in einem der Bauteile (102) umfasst, wobei
a) das eine oder die mehreren Spreizelemente (200) vorzugsweise einstückig mit dem Grundkörper (104) ausgebildet sind; und/oder
b) zwei oder mehr Spreizelemente (200)vorzugsweise zu beiden Seiten des Aufnahmekanals (106) angeordnet und mittels des Befestigungselements (108) betätigbar, insbesondere in einander abgewandte Richtungen bewegbar, sind; und/oder
c) ein oder mehrere Spreizelemente (200) vorzugsweise eine oder mehrere Schrägflächen (210) aufweisen, an welchen das Befestigungselement (108) zur Betätigung des einen oder der mehreren Spreizelemente (200) angreift und mittels welchen das eine oder die mehreren Spreizelemente (200) aus einer Ausgangsstellung in eine Spreizstellung bringbar sind.

13. Kombination aus zwei Bauteilen (102) und einem Verbindungsmittel (100) nach einem der Ansprüche 1 bis 12, wobei eines der Bauteile (102) vorzugsweise eine einer Außenform des Grundkörpers (104) des Verbindungsmittels (100) entsprechende Ausnehmung (152) umfasst, so dass der Grundkörper (104) formschlüssig in dem Bauteil (102) festlegbar ist.

14. Verfahren zum Verbinden zweier Bauteile (102), umfassend:
- Bereitstellen eines insbesondere plattenförmigen Bauteils (102);
- Einbringen einer Ausnehmung (152) durch Bearbeitung des Bauteils (102), insbesondere mittels einer Fräsmaschine, bei welcher ein Fräskopf um eine senkrecht zu einer Hauptseite (154) des Bauteils (102) verlaufende Rotationsachse (130) gedreht wird;
- Einbringen eines Grundkörpers (104) eines Verbindungsmittels (100) nach einem der Ansprüche 1 bis 12 in die Ausnehmung (152);
- Verbinden der Bauteile (102) miteinander durch Betätigen eines in dem Grundkörper (104) angeordneten Befestigungselements (108) des Verbindungsmittels (100).

## Claims

1. Connecting device (100) for connecting two components (102),
wherein the connecting device (100) comprises a main body (104), which main body (104) comprises a receiving channel (106) extending through the main body (104) for accommodating a fixing element (108), wherein the receiving channel (106) is accessible at an end (110) by way of an insertion opening (112) of the main body (104) and/or at an end (114), in particular a further end (114), by way of a fixing opening (116) of the main body (104), wherein the main body (104) comprises a base section (146) and a plurality of anchoring sections (148) projecting away or protruding from the base section (146) for anchoring the main body (104) in one of the components (102), wherein the plurality of anchoring sections (148) are configured as thickenings (150) that are cylindrical at least in sections and wherein the thickenings (150) that are cylindrical at least in sections directly adjoin one another and overlap one another.

2. Connecting device (100) in accordance with Claim 1, **characterized in that** the main body (104) comprises an actuating opening (132) that is different from the insertion opening (112) and/or the fixing opening (116), by way of which the fixing element (108) arranged in the receiving channel (106) is accessible for the actuation thereof, wherein the actuating opening (132) is configured in particular as an actuating slot (142).

3. Connecting device (100) in accordance with either of Claims 1 or 2, **characterized in that** the main body (104) is formed as one piece and/or is configured as a plastic injection molded component or as a metal die cast component.

4. Connecting device (100) in accordance with any one of Claims 1 to 3, **characterized in that** the fixing element (108) is a screw (120) and
a) **in that** the insertion opening (112) is larger than a screw head (122) of the screw (120) and/or
b) **in that** the fixing opening (116) is smaller than the screw head (122) of the screw (120) and/or
c) **in that** the fixing opening (116) is larger than a threaded section (126) of the screw (120).

5. Connecting device (100) in accordance with any one of Claims 1 to 4, **characterized in that** the actuating opening (132) is, in at least one direction, smaller than a maximum, minimum, and/or average outer diameter (D_{A}), taken perpendicularly to a connecting direction (124) of the fixing element (108), of the fixing element (108), in particular a screw head (122) and/or a threaded section (126) of a fixing element (108) configured as a screw (120).

6. Connecting device (100) in accordance with any one of Claims 1 to 5, **characterized in that** the fixing element (108) comprises an engagement section (136), on which a user of the connecting device (100) can engage by means of a tool (134) for actuating the fixing element (108), wherein preferably a tool (134) for actuating the fixing element (108), together with the engagement section (136), forms an angular gear (144).

7. Connecting device (100) in accordance with any one of Claims 1 to 6, **characterized in that** at least one anchoring section (148) is configured as a cylindrical thickening (150) of an end (110) of the main body (104) remote from the fixing opening (116) and/or **in that** at least one anchoring section (148) is preferably configured as an anchoring bolt (168) projecting away from the base section (146) perpendicularly or obliquely to a connecting direction (124) of the connecting device (100).

8. Connecting device (100) in accordance with any one of Claims 1 to 7, **characterized in that** the actuating opening (132) extends in a direction running parallel to a connecting direction (124) of the connecting device (100) over at least about a third, in particular at least about half, of a length of the main body (104) taken in the connecting direction (124).

9. Connecting device (100) in accordance with any one of Claims 1 to 8, **characterized in that** an outer side (158) of the main body (104) remote from the receiving channel (106) is provided at least in sections with anchoring ribs (160) for anchoring the main body (104) in a component (102).

10. Connecting device (100) in accordance with any one of Claims 1 to 9, **characterized in that** the connecting device (100), in addition to the fixing element (108) and the main body (104) which is arrangeable on and/or in a first of the two components (102), comprises a counter piece (172), which is fixable on and/or in a second of the two components (102), wherein the fixing element (108) is able to be brought into engagement with the counter piece (172) for connecting the two components (102).

11. Connecting device (100) in accordance with any one of Claims 1 to 10, **characterized in that** the main body (104) comprises one, two, or more positioning projections (170), which extend in the connecting direction (124) away from the main body (104) in a region of the fixing opening (116).

12. Connecting device (100) in accordance with any one of Claims 1 to 11, **characterized in that** the connecting device (100) comprises one or more spreading elements (200) for anchoring the main body (104) in one of the components (102), wherein
a) the one or more spreading elements (200) are preferably formed as one piece with the main body (104); and/or
b) two or more spreading elements (200) preferably are arranged on both sides of the receiving channel (106) and are actuateable by means of the fixing element (108), in particular are moveable in opposing directions; and/or
c) one or more spreading elements (200) preferably have one or more oblique faces (210), on which the fixing element (108) engages for actuating the one or more spreading elements (200) and by means of which the one or more spreading elements (200) are able to be brought from an initial position into a spread position.

13. Combination of two components (102) and a connecting device (100) in accordance with any one of Claims 1 to 12, wherein one of the components (102) preferably comprises a recess (152) corresponding to an external shape of the main body (104) of the connecting device (100), such that the main body (104) is fixable in the component (102) in a positive-fitting manner.

14. Method for connecting two components (102), comprising:
- providing an, in particular plate-shaped, component (102);
- introducing a recess (152) by machining the component (102), in particular by means of a milling machine, in which a milling head is rotated about a rotational axis (130) running perpendicularly to a main side (154) of the component (102);
- inserting a main body (104) of a connecting device (100) in accordance with any one of Claims 1 to 12 into the recess (152);
- connecting the components (102) to each other by actuating a fixing element (108) of the connecting device (100) arranged in the main body (104).

## Revendications

1. Moyen de liaison (100) pour la liaison de deux pièces (102), dans lequel le moyen de liaison (100) comprend un corps de base (104), lequel comprend un canal de réception (106) s'étendant à travers le corps de base (104) pour la réception d'une élément de fixation (108), le canal de réception (106) étant accessible sur une extrémité (110) par une ouverture d'introduction (112) du corps de base (104) et/ou sur une extrémité (114), en particulier une autre extrémité (114), par une ouverture d'immobilisation (116) du corps de base (104), dans lequel le corps de base (104) comprend une partie de base (146) et plusieurs parties d'ancrage (148) dépassant ou faisant saillie de la partie de base (146) pour l'ancrage du corps de base (104) dans une des pièces (102), dans lequel les plusieurs parties d'ancrage (148) sont réalisées en tant qu'épaississements (150) cylindriques au moins sur certaines parties et dans lequel les épaississements (150) cylindriques au moins sur certaines parties sont directement adjacents les uns aux autres et se chevauchent mutuellement.

2. Moyen de liaison (100) selon la revendication 1, **caractérisé en ce que** le corps de base (104) comprend une ouverture d'actionnement (132) différente de l'ouverture d'introduction (112) et/ou de l'ouverture d'immobilisation (116), par laquelle l'élément de fixation (108) disposé dans le canal de réception (106) est accessible pour l'actionnement de celui-ci, l'ouverture d'actionnement (132) étant réalisée en particulier en tant que fente d'actionnement (142).

3. Moyen de liaison (100) selon l'une des revendications 1 ou 2, **caractérisé en ce que** le corps de base (104) est réalisé d'une seule pièce et/ou en tant que pièce moulée par injection de matière plastique ou en tant que pièce coulée sous pression en métal.

4. Moyen de liaison (100) selon l'une des revendications 1 à 3, **caractérisé en ce que** l'élément de fixation (108) est une vis (120) et
a) que l'ouverture d'introduction (112) est plus grande qu'une tête de vis (122) de la vis (120) et/ou
b) que l'ouverture d'immobilisation (116) est plus petite que la tête de vis (122) de la vis (120) et/ou
c) que l'ouverture d'immobilisation (116) est plus grande qu'une partie filetée (126) de la vis (120).

5. Moyen de liaison (100) selon l'une des revendications 1 à 4, **caractérisé en ce que** l'ouverture d'actionnement (132) dans au moins une direction est plus petite qu'un diamètre extérieur (D_{A}) maximal, minimal et/ou moyen de l'élément de fixation (108), en particulier d'une tête de vis (122) et/ou d'une partie filetée (126) d'un élément de fixation (108) réalisé en tant que vis (120), pris perpendiculairement à une direction de liaison (124) de l'élément de fixation (108).

6. Moyen de liaison (100) selon l'une des revendications 1 à 5, **caractérisé en ce que** l'élément de fixation (108) comprend une partie de prise (136), sur laquelle un utilisateur du moyen de liaison (100) peut agir pour l'actionnement de l'élément de fixation (108) au moyen d'un outil (134), dans lequel de préférence un outil (134) pour l'actionnement de l'élément de fixation (108) forme conjointement avec la partie de prise (136) un engrenage d'angle (144).

7. Moyen de liaison (100) selon l'une des revendications 1 à 6, **caractérisé en ce qu'**au moins une partie d'ancrage (148) est réalisée en tant qu'épaississement (150) cylindrique d'une extrémité (110) du corps de base (104) opposée à l'ouverture d'immobilisation (116) et/ou qu'au moins une partie d'ancrage (148) est réalisée de préférence en tant que boulon d'ancrage (168) faisant saillie de la partie de base (146) perpendiculairement ou de manière inclinée par rapport à une direction de liaison (124) du moyen de liaison (100).

8. Moyen de liaison (100) selon l'une des revendications 1 à 7, **caractérisé en ce que** l'ouverture d'actionnement (132) s'étend dans une direction s'étendant parallèlement à une direction de liaison (124) du moyen de liaison (100) sur au moins approximativement un tiers, en particulier au moins approximativement la moitié, d'une longueur du corps de base (104) prise dans la direction de liaison (124).

9. Moyen de liaison (100) selon l'une des revendications 1 à 8, **caractérisé en ce qu'**une face extérieure (158) du corps de base (104) opposée au canal de réception (106) est pourvue au moins sur certaines parties de nervures d'ancrage (160) pour l'ancrage du corps de base (104) dans une pièce (102).

10. Moyen de liaison (100) selon l'une des revendications 1 à 9, **caractérisé en ce que** le moyen de liaison (100) comprend en plus de l'élément de fixation (108) et du corps de base (104) pouvant être disposé sur et/ou dans une première des deux pièces (102) une pièce complémentaire (172) pouvant être immobilisée sur et/ou dans une deuxième des deux pièces (102), dans lequel pour la liaison des deux pièces (102) l'élément de fixation (108) peut être amené en prise avec la pièce complémentaire (172).

11. Moyen de liaison (100) selon l'une des revendications 1 à 10, **caractérisé en ce que** le corps de base (104) comprend une, deux parties saillantes de positionnement (170) ou plus, lesquelles s'étendent dans une zone de l'ouverture d'immobilisation (116) dans la direction de liaison (124) à distance du corps de base (104).

12. Moyen de liaison (100) selon l'une des revendications 1 à 11, **caractérisé en ce que** le moyen de liaison (100) comprend un ou plusieurs éléments d'écartement (200) pour l'ancrage du corps de base (104) dans une des pièces (102), dans lequel
a) l'un des ou les plusieurs éléments d'écartement (200) sont réalisés de préférence d'une seule pièce avec le corps de base (104) ; et/ou
b) deux éléments d'écartement (200) ou plus sont disposés de préférence des deux côtés du canal de réception (106) et peuvent être actionnés au moyen de l'élément de fixation (108), en particulier dans des directions opposées les unes aux autres ; et/ou
c) un ou plusieurs éléments d'écartement (200) présentent de préférence une ou plusieurs surfaces inclinées (210), sur lesquelles l'élément de fixation (108) agit pour l'actionnement d'un des ou des plusieurs éléments d'écartement (200) et au moyen desquels un des ou les plusieurs éléments d'écartement (200) peuvent être amenés d'une position de départ dans une position d'écartement.

13. Combinaison de deux pièces (102) et d'un moyen de liaison (100) selon l'une quelconque des revendications 1 à 12, dans laquelle une des pièces (102) comprend de préférence un évidement (152) correspondant à une forme extérieure du corps de base (104) du moyen de liaison (100), de sorte que le corps de base (104) peut être immobilisé dans la pièce (102) par coopération de formes.

14. Procédé pour relier deux pièces (102), comprenant :
- la fourniture d'une pièce (102) en particulier en forme de plaque ;
- le ménagement d'un évidement (152) par usinage de la pièce (102), en particulier au moyen d'une fraiseuse, pour laquelle une tête de fraisage est amenée en rotation autour d'un axe de rotation (130) s'étendant perpendiculairement à une face principale (154) de la pièce (102) ;
- l'introduction d'un corps de base (104) d'un moyen de liaison (100) selon l'une quelconque des revendications 1 à 12 dans l'évidement (152) ;
- la liaison des pièces (102) l'une à l'autre par actionnement d'un élément de fixation (108) du moyen de liaison (100) disposé dans le corps de base (104).
